# EUROPÄISCHE PATENTSCHRIFT

(11) **EP 3 620 232 B1**
(45) Veröffentlichungstag und Bekanntmachung des Hinweises auf die Patenterteilung: **04.11.2020**
(21) Anmeldenummer: 18193328.4
(22) Anmeldetag: 10.09.2018
(51) Int. Cl.: B01L 3/00, G01N 17/04

(54) **EINSATZ FÜR REAKTIONSBEHÄLTER, REAKTIONSBEHÄLTER, PRÜFSYSTEM, VERFAHREN UND VERWENDUNG EINES EINSATZES FÜR REAKTIONSBEHÄLTER ZUM NACHWEIS VON AUS EINER STOFFPROBE AUSTRETENDEN GASFÖRMIGEN SUBSTANZEN**
INSERT FOR REACTION VESSEL, REACTION VESSEL, TEST SYSTEM, METHOD AND USE OF AN INSERT FOR REACTION VESSEL FOR DETECTION OF GASEOUS SUBSTANCES EMERGING OUT OF A SAMPLE OF A SUBSTANCE
INSERT POUR RÉCIPIENT DE RÉACTION, RÉCIPIENT DE RÉACTION, SYSTÈME DE VÉRIFICATION, PROCÉDÉ ET UTILISATION D'UN INSERT POUR RÉCIPIENT DE RÉACTION PERMETTANT LA DÉTECTION D'UN ÉCHANTILLON DE MATIÈRE DES SUBSTANCES GAZEUSES SORTANTES

(43) Veröffentlichungstag der Anmeldung: 11.03.2020
(73) Patentinhaber: Hochschule für Technik und Wirtschaft Berlin, 10318 Berlin (DE)
(72) Erfinder: Heine, Hildegard, 12459 Berlin (DE); Naskowski, Henry, 15713 Niederlehme (DE)
(74) Vertreter: Gramm, Lins & Partner Patent- und Rechtsanwälte PartGmbB

(56) Entgegenhaltungen:
- CN-Y- 201 149 575
- US-A1- 2017 113 160
- GAIL GALI BEINER ET AL: "Oddy Tests: Adding the Analytical Dimension", COLLECTION FORUM, Bd. 29, Nr. 1-2, 1. Januar 2015 (2015-01-01), Seiten 22-36, XP055557056, ISSN: 0831-4985, DOI: 10.14351/0831-4985-29.1.22

## Beschreibung

Die Erfindung betrifft einen Einsatz für Reaktionsbehälter, einen Reaktionsbehälter, ein Prüfsystem, ein Verfahren und eine Verwendung eines Einsatzes für Reaktionsbehälter zum Nachweis von aus einer Stoffprobe austretenden gasförmigen Substanzen.

### Stand der Technik

In der Praxis ist es zuweilen erforderlich, bestimmte Stoffe oder Stoffzusammensetzungen auf ihre chemische Verträglichkeit mit anderen Materialien zu testen, die in Kombination oder zumindest in der Nähe der bestimmten Stoffe oder Stoffzusammensetzungen eingesetzt werden sollen. Hierfür gibt es eine Reihe von Tests, die speziell Reaktionen der Materialien mit gasförmigen Bestandteilen der Stoffe oder Stoffzusammensetzungen untersuchen sollen, um die Wirkung oder Folgen von Ausgasungen der Stoffe in Bezug auf die zu prüfenden Materialien abschätzen zu können.

Beispielsweise im Bereich von Archiven, Bibliotheken, Kunstgalerien und Museen ist es von hoher Bedeutung, dass die hierin befindlichen wertvollen und unersetzlichen Kunst- und Kulturobjekte keine unerwünschten Reaktionen mit den sie umgebenden Stoffen oder Stoffzusammensetzungen zeigen. So können etwa ungeeignete Baumaterialien in einem Gebäude, aber auch bestimmte Arten von Vitrinenbaustoffen oder Verpackungsmaterialien aufgrund von Ausgasungen zu Materialveränderungen durch Oxidations- und Reduktionsvorgänge an den Objekten führen, ohne dass hierzu eine direkte Berührung des Objekts mit dem schädlichen Stoff- bzw. der Stoffzusammensetzung vorliegen muss.

Um bereits im Voraus derartige unerwünschte Reaktionen ausschließen zu können, ist es verbreitet, kleine Proben des möglicherweise schadstoffinduzierte Schäden auslösenden Materials in einem definierten Reaktionsraum unter bestimmten Umgebungsbedingungen zu platzieren und ihre chemische Wirkung auf ebenfalls in dem Reaktionsraum befindliche, die Probe jedoch nicht berührende Indikatoren über einen vorbestimmten Zeitraum zu beobachten. Anhand chemischer Veränderungen an einzelnen oder allen Indikatoren kann auf ein möglicherweise existierendes Schädigungspotential des beprobten Materials auf bestimmte Objekte geschlossen werden, die die Indikatormaterialien enthalten. Da die entstehenden Korrosionsprodukte oft bekannt sind, können auch indirekte Rückschlüsse auf andere Objektmaterialien gezogen werden.

Ein Beispiel für eine solche zeitlich begrenzte Verträglichkeitsprüfung ist der sogenannte Oddy-Test, mit dem gasförmige Schadstoffe detektiert werden können, die beispielsweise aus Materialien für die Vitrinenkonstruktion ausgasen. Risikobehaftete Materialien sollen somit von vorne herein bei der Konstruktion von Vitrinen für die Ausstellung musealer Objekte ausgeschlossen werden. Der klassische Oddy-Test ist ein beschleunigter Korrosionstest, bei dem Schadstoffe ausschließlich über die Gasphase bei sehr hoher relativer Feuchte und erhöhter Temperatur Oxidations- und Reduktionsvorgänge bis hin zur Korrosion an drei Indikatormetallen (i.d.R. Silber, Kupfer und Blei) auslösen. Der Bewertungszustand der Indikatormetalle wird nach etwa 28 Tagen erreicht.

In der Praxis hat sich herausgestellt, dass die genaue Handhabung und Durchführung des Oddy-Tests variieren kann, sodass die Testergebnisse je nach Rahmenbedingungen voneinander abweichen können und daher oft nicht reproduzierbar sind. Somit ist ein Bedarf nach Vereinheitlichung und Standardisierung der Rahmenbedingungen solcher Ausgasungstests erkennbar, um zuverlässige und reproduzierbare Testergebnisse bereitstellen zu können.

Die Druckschrift CN 201149575 Y offenbart einen Testbehälter zur Untersuchung von im Museumskontext eingesetzten Materialien. Der Testbehälter umfasst eine Glasflasche oder ein Glasrohr mit einem Verschluss, an dem Haken zum Aufhängen von Indikatoren angeordnet sind. Das zu prüfende Material sowie ein Teströhrchen mit destilliertem Wasser und einem auf dem Teströhrchen platzierten Baumwollpfropfen werden am Boden des Glasrohrs platziert. Mit dem Testbehälter soll eine Standardisierung der Materialuntersuchung erleichtert werden. Die genauen Testbedingungen weisen jedoch auch mit dem Testbehälter gemäß der CN 201149575 Y noch zu viele Variablen auf, um reproduzierbare Testergebnisse zu liefern. Außerdem können unerwünschte, nicht testgemäße Nebenreaktionen an den Indikatoren durch emittierende Materialien innerhalb des Testbehälters auftreten. Zudem sind die Testvorbereitungen und die Bestückung des Testbehälters relativ aufwendig.

Der Aufsatz "Oddy Tests: Adding the Analytical Dimension" von Gail Gali Beiner et.al., erschienen am 1. Januar 2015 im Collection Forum, Bd. 29, Nr. 1-2, offenbart einen Reaktionsbehälter für Oddy-Tests mit mehreren Nylonfäden als Halter für die verschiedenen Reaktionskomponenten. Die Nylonfäden sind unterschiedlich lang, um eine räumliche Beabstandung zwischen den Reaktionsteilnehmern zu erwirken. Die Nylonfäden werden an dem den Reaktionsbehälter verschließenden Stopfen befestigt.

Die US 2017/0113160 A1 zeigt einen Kondensationsstab für Destillationsbehälter. Der Kondensationsstab geht an einem Ende in einen Verschlussstopfen für den Destillationsbehälter über. Entlang des Kondensationsstabes sind ringförmige Niederschlagskörper vorgesehen, an denen in dem Destillationsbehälter vorhandene Dämpfe kondensieren können.

### Beschreibung der Erfindung

Hiervon ausgehend ist es Aufgabe der Erfindung, einen verbesserten Reaktionsbehälter anzugeben, der die Zuverlässigkeit von Testergebnissen weiter erhöht und die Handhabung der Testkomponenten erleichtert.

Die Aufgabe wird mit einem Einsatz für Reaktionsbehälter gelöst, der einen Dichtabschnitt zum dichtenden Verschließen des Reaktionsbehälters, zumindest einen Halter für ein Indikatormaterial sowie zusätzlich zumindest einen weiteren Halter für Reaktionszusätze und/oder die Stoffprobe aufweist. Der zumindest eine weitere Halter für Reaktionszusätze und/oder die Stoffprobe weist zumindest ein Reagenzröhrchen zur Aufnahme eines Reaktionszusatzes und/oder der Stoffprobe auf. Der zumindest eine Halter für das Indikatormaterial ist durch einen Verbindungssteg von dem zumindest einen weiteren Halter für Reaktionszusätze und/oder die Stoffprobe räumlich beabstandet.

Mithilfe des erfindungsgemäßen Einsatzes für Reaktionsbehälter wird insbesondere die Platzierung der Reaktionsteilnehmer vereinheitlicht und erleichtert, sodass die Handhabung insgesamt verbessert wird. Durch die Halter wird vermieden, dass sich die Testbestandteile wie die Indikatoren, die Stoffprobe und die Reaktionszusätze gegenseitig berühren und es somit zu nicht testgemäßen Indikatorreaktionen kommt. Insgesamt wird dadurch auch die Reproduzierbarkeit der Ergebnisse erhöht. Die Versuche können außerdem wesentlich einfacher vorbereitet werden, da zunächst eine erleichterte Bestückung des Einsatzes erfolgen kann, bevor dieser in einen Reaktionsbehälter eingeführt wird. Aufgrund der einfachen Handhabung kann der erfindungsgemäße Einsatz auch von nicht geschultem Personal verwendet werden.

Hierbei wird unter einem Einsatz ein Bauteil verstanden, das zumindest abschnittsweise in einen Reaktionsbehälter einführbar und bevorzugt lösbar an oder in diesem fixierbar ist, also diesem zerstörungsfrei und wiederverwendbar wieder entnommen werden kann. Der Einsatz kann in verschiedenen Grundformen ausgeführt und insbesondere an die Grundform des Reaktionsbehälters angepasst sein, beispielsweise für röhrchenförmige Reaktionsbehälter eine längliche Stabform aufweisen.

Ein Dichtabschnitt zum dichtenden Verschließen eines Reaktionsbehälters kann beispielsweise ein Stopfen oder eine Kappe sein, wobei die Konturen des Dichtabschnitts im Zustand des in den Reaktionsbehälter eingeführten Einsatzes an einer Wandung des Reaktionsbehälters anliegen sollten, um eine dichtende Wirkung zu erzielen. Unter einem dichtenden Verschließen wird bevorzugt ein gas- und dampfdichter Abschluss verstanden, zumindest sollte eine flüssigkeitsdichte Wirkung erreicht werden.

Die Stoffprobe stellt eine Materialprobe des zu untersuchenden Stoffes dar, der auf Ausgasungen geprüft werden soll. Es ist hierbei als unerheblich anzusehen, ob es sich um einen reinen Stoff oder ein Stoffgemisch handelt. Die Stoffprobe hat bevorzugt einen festen Aggregatzustand und kann stückig oder formlos, beispielsweise als Zuschnitt oder in Pulverform, vorliegen. Jedoch ist die Erfindung grundsätzlich auch für flüssige Stoffproben geeignet, beispielsweise zur Untersuchung von bestimmten Lacken oder Farben auf schädliche Ausgasungen (Emissionen).

Als Indikatormaterial kommen bevorzugt feste Indikatorstoffe in Betracht, beispielsweise als Zuschnitt in Form von Metallplättchen. Diese sollten zur nachweisbaren Reaktion mit aus der Stoffprobe austretenden gasförmigen Substanzen geeignet sein, also eine vorab definierte Stoffzusammensetzung aufweisen und die Möglichkeit für eine Untersuchung des Indikatormaterials bieten. Im Idealfall erlauben sie eine visuelle Prüfung, die schnell und zuverlässig zu eindeutigen Testergebnissen führt, ohne eine aufwendige chemische Analyse zu erfordern. Als Indikatormetalle kommen bevorzugt Silber, Kupfer oder Blei in Betracht.

Als Reaktionszusätze werden weitere Stoffe angesehen, die bei der Durchführung des jeweiligen gewünschten Tests beispielsweise zur Erzielung von bestimmten Umgebungsbedingungen benötigt werden. Für die Reaktion ist beispielsweise die Zugabe von Wasser, wie destilliertes Wasser, z.B. bi-destilliertes Wasser, erforderlich, um die für einen Korrosionstest benötigte hohe relative Feuchte zu erzielen. Jedoch können auch, insbesondere auch ergänzend, Adsorber wie etwa Aktivkohle als Reaktionszusatz genutzt werden, um beispielsweise im Anschluss an den Test eine detailliertere Schadstoffanalyse durchführen zu können. Bevorzugt wird jeder Reaktionszusatz in jeweils einem Halter für Reaktionszusätze angeordnet. Beispielsweise wird das (bi)-destillierte Wasser in einen ersten und der Adsorber in einem zweiten Halter für Reaktionszusätze angeordnet.

Der Einsatz weist zumindest einen weiteren Halter für Reaktionszusätze und/oder die Stoffprobe auf. Dies bedeutet, dass er beispielsweise ein, zwei oder mehr Halter für Reaktionszusätze hat, sodass die Reaktionszusätze in oder an diesen Haltern platziert werden können, während die zu untersuchende Stoffprobe woanders, beispielsweise am Boden des Reaktionsbehälters angeordnet wird. Genauso gut könnte der Einsatz jedoch auch ein, zwei oder mehr Halter für Stoffproben haben, während die Reaktionszusätze woanders, beispielsweise am Boden des Reaktionsbehälters angeordnet werden. Ebenso ist es jedoch auch vorstellbar, dass der Einsatz einen oder mehr Halter für Reaktionszusätze und hiervon beabstandet einen oder mehr weitere Halter für Stoffproben aufweist. Im letzten Fall ist zur Durchführung eines Tests lediglich der Einsatz zu bestücken und in einen Reaktionsbehälter einzuführen, ohne dass beispielsweise an dessen Boden weitere Komponenten platziert werden müssen.

Gemäß einer bevorzugten Ausführungsform sind der zumindest eine Halter für das Indikatormaterial sowie der zumindest eine weitere Halter für Reaktionszusätze und/oder die Stoffprobe aus dem gleichen Material hergestellt. Durch diese Reduktion der verwendeten Materialien wird das Risiko unerwünschter Nebenreaktionen an den Indikatoren bei der Durchführung des Nachweises wesentlich reduziert. Zudem können die Halter auf diese Weise auch einstückig hergestellt werden, was die Montage bzw. auch die Handhabbarkeit erleichtert. In einer besonders bevorzugten Variante ist zudem auch der Dichtabschnitt aus dem gleichen Material wie die Halter des Einsatzes hergestellt. Besonders günstig ist es, wenn das Material des zumindest einen Halters für das Indikatormaterial sowie des zumindest einen weiteren Halters für Reaktionszusätze und/oder die Stoffprobe ein Glasmaterial ist. Somit wird ein reaktionsträges Material verwendet, das zudem transparent ist und dadurch eine einfache Sichtprüfung des Testaufbaus ermöglicht. Bei dem Glasmaterial kann es sich bevorzugt um ein Borosilikatglas handeln, welches ein besonders chemikalien- und temperaturbeständiges Glas ist. Bevorzugt ist der gesamte Einsatz oder zumindest ein Großteil des Einsatzes aus einem reaktionsarmen Material, beispielsweise Glas, insbesondere Borosilikatglas. Der Einsatz kann in einer bevorzugten Variante einstückig hergestellt sein.

Das Reagenzröhrchen zur Aufnahme eines Reaktionszusatzes und/oder der Stoffprobe ermöglicht ein einfaches Einführen und sicheres Halten des jeweiligen Reaktionszusatzes bzw. der Stoffprobe. Das Reagenzröhrchen ist bevorzugt offen und verschlusslos ausgeführt, kann aber auch bedarfsweise verschließbar sein. Zur Reduktion verwendeter Materialien und somit zur Vermeidung unerwünschter Nebenreaktionen wird bevorzugt auf einen Verschluss des Reagenzröhrchens, insbesondere in Form des im Stand der Technik gezeigten Baumwollpfropfens, verzichtet.

Selbstverständlich ist es auch denkbar, mehrere Reagenzröhrchen neben- oder übereinander anzuordnen, um weitere Reaktionszusätze oder Stoffproben in komfortabler Weise zu platzieren.

Der Verbindungssteg kann einteilig mit dem einen Halter und/oder dem weiteren Halter oder hieran befestigbar ausgeführt sein. Zumindest kann der Verbindungssteg aus dem gleichen Material wie die Halter sein. Die Einhaltung eines bestimmten Abstands reduziert unerwünschte Nebenreaktionen, beispielsweise eine direkte Korrosion von Indikatoren durch das als Reaktionszusatz bereitgestellte Wasser. Ein solcher Abstand kann beispielsweise mindestens 20 mm, bevorzugter mindestens 30 mm oder noch bevorzugter mindestens 40 mm betragen.

Gemäß einer besonders günstigen Ausführungsform ist der zumindest eine Halter für das Indikatormaterial als geschlitzter Steg mit einem gebogenen Endabschnitt ausgeführt. Der Steg kann dabei als von dem Einsatz auskragender Freiträger mit einem freien Endabschnitt ausgeführt sein. Hierbei ist der Endabschnitt bevorzugt nach oben und nach innen, also in Richtung einer Stegwurzel gebogen. Hierdurch wird ein an dem Halter angeordnetes Indikatormaterial besonders sicher gehalten und die Handhabung beim Anordnen des Indikatormaterials erleichtert. Außerdem wird das Einbringen des bestückten Einsatzes in einen Reaktionsbehälter wesentlich vereinfacht. Der geschlitzte Steg ist bevorzugt derart ausgeführt, dass ein oder mehr Schlitze an einer vertikal gesehen oberen Seite des Stegs als Einkerbung oder Nut eingebracht sind. Hierdurch wird der Halt des Indikatormaterials verbessert und eine definierte Position des Indikatormaterials vorgegeben, wodurch die Einheitlichkeit von Tests weiter erhöht wird. An Stelle von Schlitzen sind jedoch selbstverständlich auch andere Befestigungsmöglichkeiten denkbar, beispielsweise Lagerschalen oder Clips.

Bevorzugt ist es, wenn der Dichtabschnitt zumindest eine Nut für einen Dichtring aufweist. Hierdurch kann der Einsatz eine besonders einfache und zuverlässige Abdichtung eines umgebenden Reaktionsbehälters gewährleisten. Als Dichtringe kommen beispielsweise O-Ringe zum Einsatz, wobei bevorzugt zwei Dichtringe an dem Dichtabschnitt angeordnet werden. Die O-Ringe sind beispielsweise aus Fluor-Karbon-Kautschuk mit nahtloser Ummantelung aus fluoriertem Ethylen-Propylen. Der Dichtabschnitt selbst besteht vorzugsweise aus dem gleichen Material wie die Halter für Indikatormaterialien und für Reaktionszusätze, insbesondere aus einem Glas, bevorzugt aus einem Borosilikatglas. Die zuverlässige Abdichtung ist für Nachweise der beschriebenen Art von besonders hoher Bedeutung, da für die Erreichung der beschleunigten Korrosion eine hohe relative Feuchte über einen längeren Zeitraum beibehalten werden muss, gleichzeitig jedoch nicht zu viel Wasser verwendet werden darf, um eine direkte Korrosion des Indikatormaterials durch das zugesetzte Wasser zu vermeiden.

Der erfindungsgemäße Einsatz kann in einer vorteilhaften Ausführungsform einen oder mehrere Halter für Indikatormaterialien, einen oder mehrere Halter für Reaktionszusätze und einen oder mehrere Halter für Stoffproben haben. Bei dieser Ausführungsform sind die Halter für Indikatormaterialien, die Halter für Reaktionszusätze und die Halter für Stoffproben jeweils voneinander beabstandet, um Berührungen der jeweiligen Materialien bzw. Nebenreaktionen zu vermeiden. Die Beabstandung kann beispielsweise über den vorbeschriebenen Verbindungssteg erfolgen, der entsprechend verlängert ist, um eine weitere Halterart in einem vertikalen Abstand aufzunehmen. Bei dieser Ausführungsform sind die Bestückung des Einsatzes sowie das Einführen desselben in einen Reaktionsbehälter weiter vereinfacht und somit die Testvorbereitung und -durchführung erleichtert und beschleunigt.

In einer besonders bevorzugten Variante weist der Einsatz drei Halter für insgesamt drei Indikatormaterialien (z.B. Silber, Kupfer und Blei), zwei Halter für insgesamt zwei Reaktionszusätze (z.B. Wasser und Aktivkohle) sowie gegebenenfalls einen Halter für die zu untersuchende Stoffprobe auf.

Die zu untersuchende Stoffprobe kann in einer Ausführungsform nicht in einem erfindungsgemäßen Einsatz vorliegen, sondern in dem Reaktionsbehälter angeordnet sein. Z. B. kann die Stoffprobe in einem offenen Behältnis eingebracht werden, wie einer Schale, bevorzugt aus dem gleichen Material wie der Einsatz.

Die Aufgabe wird auch mit einem Reaktionsbehälter mit einem Einsatz gemäß den vorbeschriebenen Merkmalen gelöst. Der Reaktionsbehälter ist bevorzugt eine längliche Glashülse, wie sie häufig auch als Reagenzglas für chemische Analysen verwendet wird. Der Reaktionsbehälter ist hierbei verschließbar ausgeführt, und zwar mittels des Dichtabschnitts des Einsatzes.

In einer präferierten Ausführungsform weist der Reaktionsbehälter und/oder der Einsatz ergänzend einen Schraubverschluss auf. Dieser fixiert, sichert und verschließt den Einsatz in dem Reaktionsbehälter, sodass die Dichtigkeit und der sichere Verschluss des Reaktionsbehälters nochmals verbessert werden. Der Schraubverschluss kann zweiteilig, beispielsweise als Außengewinde an dem Reaktionsbehälter und mit einer zugehörigen Verschlusskappe mit einem korrespondierenden Innengewinde, ausgeführt sein. Zusätzlich kann der Schraubverschluss einen Puffering, beispielsweise aus Ethylen-Propylen-Dien-Kautschuk aufweisen, um die Dichtigkeit des Verschlusses nochmals zu erhöhen.

Die Aufgabe wird zudem mit einem Prüfsystem zum Nachweis von aus einer Stoffprobe austretenden gasförmigen Substanzen gelöst, wobei das Prüfsystem einen Einsatz gemäß den vorbeschriebenen Merkmalen sowie einen Reaktionsbehälter und Indikatormaterial hat. Hierdurch wird ein umfangreiches Prüfsystem, nachfolgend auch synonym Kit genannt, zur Durchführung des Nachweises bereitgestellt, das die wesentlichen Komponenten für den Test bereits enthält. Bevorzugterweise wird das Indikatormaterial als Set aus vorgefertigten Metallplättchen bereitgestellt. Die Fertigung der Metallplättchen kann beispielsweise durch Schneiden aus Folien im Wasserstrahlverfahren oder durch Stanzen erfolgen, wobei sich dem Schneiden ein Reinigen, Trocknen und Verpacken anschließen kann. Auch eine Fertigung durch Bedampfen oder Beschichten eines inerten Trägermaterials, beispielsweise Glas oder Keramik, mit einem Metall ist denkbar. Bei einem solchen Fertigungsverfahren ist keine anschließende Nachbearbeitung wie beispielsweise ein Trocknen notwendig. Durch die Bereitstellung von Indikatormaterial als Set aus vorgefertigten Metallplättchen wird ein nachhaltigerer Umgang mit den erforderlichen Metallen erreicht, da diese sonst üblicherweise aus Folien ausgeschnitten werden, die aufgrund ihrer Sensibilität nicht wiederverwendbar sind. Zudem kann die Herstellung der Indikatormaterialien weitestgehend automatisiert erfolgen, sodass die Standardisierung und Vereinheitlichung der Testbestandteile weiter verbessert wird.

Die Metallplättchen können bei der Vorfertigung mit einer Bohrung versehen werden, um besonders einfach an dem Halter für Indikatormaterial angeordnet zu werden. Selbstverständlich ist es auch denkbar, dass beispielsweise ein Anhänger oder ein anderes Befestigungsmittel an einem Metallplättchen befestigt oder mit diesem integral ausgeformt ist. Bei einer geeigneten Ausführung des Halters für das Indikatormaterial, beispielsweise als Clip, können die Metallplättchen auch gänzlich ohne Befestigungsmittel oder Bohrung ausgeführt sein. Die Metallplättchen können zudem speziell verpackt sein, beispielsweise eine Verpackung mit Atmosphärenschutz aufweisen, sodass sie über mehrere Monate lagerbar sind, ohne ihre Eignung als Indikatormaterial zu verlieren. In einer Ausführungsform umfasst diese Verpackung entsprechend einen Trockenmittelzusatz. Für eine solche Verpackung kann beispielsweise Aluminiumverbundfolie mit einem Trockenmittelzusatz, beispielsweise Zeolith, verwendet werden.

Weiterhin kann das Prüfsystem geeignete Behältnisse zur Aufnahme der Stoffproben umfassen, wie entsprechend dem Reaktionsbehälter angepasste offene Schalen.

Selbstverständlich kann das Prüfsystem zudem weitere Bestandteile, zum Beispiel Reaktionszusätze wie etwa Wasser oder Aktivkohle enthalten.

In einer besonders günstigen Ausführungsform weist das Prüfsystem zusätzlich eine Auswerteeinheit für einen computergestützten Nachweis von aus einer Stoffprobe austretenden gasförmigen Substanzen auf. Hierdurch soll die Auswertung von Testergebnissen weiter verbessert, insbesondere mit objektiven Kriterien vereinheitlicht und reproduzierbarer werden. Bisherige Testauswertungen erfolgen üblicherweise visuell und ohne weitere Hilfsmittel durch Personen und basieren somit auf subjektiven Eindrücken. Die Auswerteeinheit kann einen optischen Sensor, beispielsweise eine Mikroskopkamera, und ein hiermit verbundenes Auswertgerät haben. Das Auswertgerät kann beispielsweise eine Workstation, ein Laptop oder auch ein Smartphone sein. Das Auswertgerät kann beispielsweise ein Bildverarbeitungsprogramm und eine Datenbank enthalten. Die Datenbank könnte etwa eine Vielzahl grafischer Muster oder Vergleichsfotos in Verknüpfung mit jeweils einem spezifischen Testergebnis enthalten, sodass das Bildverarbeitungsprogramm Vergleiche mit den in der Datenbank enthaltenen Datensätzen vornimmt und bei teilweiser oder vollständiger Übereinstimmung einer mit dem optischen Sensor erhaltenen Aufnahme mit einem Datensatz ein entsprechendes Testergebnis ausgibt. Selbstverständlich sind auch andere Auswertverfahren, beispielsweise basierend auf maschinellem Lernen, insbesondere auf Auswertmethoden mit künstlicher Intelligenz, oder statistischen Ermittlungsmethoden denkbar.

Die Aufgabe wird auch mit einem Verfahren zum Durchführen eines Nachweises von aus einer Stoffprobe austretenden gasförmigen Substanzen gelöst. Das Verfahren hat grundsätzlich die folgenden Schritte:
a1) Einbringen einer Stoffprobe in einen Reaktionsbehälter und Einbringen zumindest eines Reaktionszusatzes in einen Reaktionszusatzhalter eines Einsatzes des Reaktionsbehälters;
a2) oder alternativ Einbringen einer Stoffprobe in einen Stoffprobenhalter eines Einsatzes eines Reaktionsbehälters und Einbringen zumindest eines Reaktionszusatzes in den Reaktionsbehälter;
a3) oder alternativ Einbringen einer Stoffprobe in einen Stoffprobenhalter eines Einsatzes eines Reaktionsbehälters und Einbringen zumindest eines Reaktionszusatzes in einen Reaktionszusatzhalter des Einsatzes des Reaktionsbehälters;
b) Befestigen zumindest eines Indikatormaterials an einem Indikatorhalter des Einsatzes des Reaktionsbehälters;
c) Einsetzen des Einsatzes in den Reaktionsbehälter;
d) Verschließen des Reaktionsbehälters mit einem dichtenden Verschluss;
e) Erwärmen des verschlossenen Reaktionsbehälters für eine vorbestimmte Versuchszeit;
f) nach Ablauf der vorbestimmten Versuchszeit Prüfen der Indikatoren auf Merkmale einer chemischen Reaktion des Indikatormaterials mit aus der Stoffprobe ausgetretenen gasförmigen Substanzen.

Hierbei weist der Einsatz des Reaktionsbehälters die vorbeschriebenen erfindungsgemäßen Merkmale des Einsatzes auf.

Die Schritte a1), a2) und a3) sind als drei Alternativen zu verstehen, von denen jeweils eine Variante pro Nachweis anwendbar ist. Welche Alternative geeignet ist, hängt z. B. von der Beschaffenheit des Einsatzes des Reaktionsbehälters ab, da dieser wahlweise Reaktionszusatzhalter oder Stoffprobenhalter oder beide Arten von Haltern mit einem dazwischen belassenen Abstand aufweisen kann. Die weiteren Schritte b) bis f) können um zahlreiche weitere Schritte vor, nach oder zwischen den Schritten b) bis f) ergänzt werden.

Die Schritte a1), a2) oder a3) und der Schritt b) können in beliebiger Reihenfolge durchgeführt werden. Das bedeutet, dass zuerst die Stoffprobe und die Reaktionszusätze eingebracht und anschließend das Indikatormaterial befestigt werden können oder umgekehrt.

Beispielsweise kann den Schritten a1), a2) und a3) eine sorgfältige Reinigung und Trocknung von Testbestandteilen wie beispielsweise des Reaktionsbehälters und des Einsatzes vorgelagert sein. Auch können die Indikatormaterialien vor der Durchführung des Nachweises nochmals aufbereitet oder geprüft werden, z.B. in eine bestimmte Form geschnitten oder gewogen werden. Auch die zu prüfende Stoffprobe kann aufbereitet oder geprüft werden, z.B. zu einem Pulver verarbeitet oder über einen gewissen Zeitraum gelüftet werden.

Auch können grundsätzlich mehrere Nachweise gleichzeitig durchgeführt werden, indem jeweils mehrere Reaktionsbehälter mit den zugehörigen Einsätzen bestückt und verschlossen sowie beispielsweise in temperaturfesten Ständern, die etwa aus Aluminium sind, nebeneinander aufgereiht werden.

Hinsichtlich des Schrittes e), Erwärmen des verschlossenen Reaktionsbehälters für eine vorbestimmte Versuchszeit, kann ein solches Erwärmen beispielsweise auf eine Temperatur zwischen 40 und 80 °C, insbesondere zwischen 50 und 70 °C erfolgen. Dieser Temperaturbereich ist für einen beschleunigten Korrosionstest besonders geeignet, da er die chemische Reaktion zwischen ausgasenden Substanzen und dem Indikatormaterial fördert, ohne die beteiligten Reaktionsteilnehmer zu schädigen. Als besonders geeigneter Feuchtebereich für den Ablauf des Tests gelten 50% bis 100%, bevorzugt 55%-80% relative Luftfeuchte. Als vorbestimmte Versuchlaufzeit wird insbesondere eine Zeit zwischen zwei und sechs Wochen, bevorzugter zwischen drei und fünf Wochen präferiert.

Hinsichtlich des Schrittes f), nach Ablauf der vorbestimmten Versuchlaufzeit Prüfen der Indikatoren auf Merkmale einer chemischen Reaktion des Indikatormaterials mit aus der Stoffprobe ausgetretenen gasförmigen Substanzen, kann das Prüfen beispielsweise visuell mit bloßem Auge erfolgen. Hierbei kann beispielsweise auf Farbänderungen oder Materialveränderungen an den Indikatoren geachtet werden. So können schon kleine farbliche Veränderungen darauf hinweisen, dass eine eingeschränkte Materialverträglichkeit vorliegt, die nur einen temporären Einsatz des geprüften Materials im Zusammenhang mit einem reaktionssensiblen Objekt erlaubt. Stärkere Oberflächen- oder Farbveränderungen deuten hingegen auf eine auszuschließende Materialverträglichkeit hin.

In einer bevorzugten Ausführungsform des Verfahrens erfolgt der Schritt f), also die Untersuchung der Indikatoren auf Merkmale einer chemischen Reaktion, computergestützt mit einem Bildverarbeitungsprogramm. Hierdurch soll die Auswertung von Testergebnissen weiter verbessert, insbesondere mit objektiven Kriterien vereinheitlicht und reproduzierbarer werden. Das Bildverarbeitungsprogramm kann beispielsweise mit einer Datenbank verknüpft sein. Die Datenbank könnte etwa eine Vielzahl grafischer Muster oder Vergleichsfotos in Verknüpfung mit jeweils einem spezifischen Testergebnis enthalten, sodass das Bildverarbeitungsprogramm Vergleiche mit den in der Datenbank enthaltenen Datensätzen vornimmt und bei teilweiser oder vollständiger Übereinstimmung einer mit dem optischen Sensor erhaltenen Aufnahme mit einem Datensatz ein entsprechendes Testergebnis ausgibt. Selbstverständlich sind auch andere Auswertverfahren, beispielsweise basierend auf maschinellem Lernen, insbesondere auf Auswertmethoden mit künstlicher Intelligenz, oder statistischen Ermittlungsmethoden denkbar.

Die Aufgabe wird auch durch eine Verwendung eines Einsatzes für einen Reaktionsbehälter gemäß den vorbeschriebenen Merkmalen für Versuche zur Prüfung der Objektverträglichkeit von Materialien mit chemisch reaktionssensiblen Objekten und Umgebungen gelöst. Unter reaktionssensiblen Objekten werden beispielsweise materialbedingt, aufgrund von Alterungsprozessen oder aufgrund anderer objektimmanenten Ursachen empfindliche Objekte verstanden, die möglicherweise zudem kulturell oder historisch wertvoll sind. Entsprechend handelt es sich bei reaktionssensiblen Umgebungen um besonders schützenswerte Umgebungen, insbesondere mit reaktionssensiblen Objekten, wie etwa Museen, Archive, Bibliotheken, Denkmäler oder Kunstgalerien. Der zuvor beschriebene Erfindungsgegenstand eignet sich aufgrund seiner erhöhten Handhabbarkeit und der zuverlässigen sowie einheitlichen und reproduzierbaren Ergebnisse besonders für Institutionen mit solchen sensiblen Umgebungen für die Durchführung von Verträglichkeitsuntersuchungen, insbesondere beschleunigte Korrosionstests. Aufgrund der erleichterten Handhabung kann die Erfindung auch beispielsweise von Museumsmitarbeitern oder Architekten verwendet werden, ohne dass eine sensible und kostenintensive chemische Analytik benötigt wird.

Der erfindungsgemäße Einsatz, der Reaktionsbehälter mit Einsatz sowie das Prüfsystem gemäß der vorliegenden Erfindung eignen sich insbesondere zur Verwendung in einem Oddy-Test.

Die Erfindung wird nachfolgend anhand von Ausführungsbeispielen unter Verwendung von Zeichnungen näher erläutert. Es zeigen
- Fig. 1: - einen erfindungsgemäßen Einsatz für Reaktionsbehälter in einer Vorderansicht;
- Fig. 2: - den erfindungsgemäßen Einsatz gemäß Fig. 1 in einer Seitenansicht;
- Fig. 3: - einen Reaktionsbehälter in einer Vorderansicht;
- Fig. 4: - den in den Reaktionsbehälter gemäß Fig. 3 eingesetzten Einsatz gemäß Fig. 1 sowie einen Schraubverschluss und einen Pufferring in einer perspektivischen Ansicht;
- Fig. 5: - den in den mit einer Stoffprobe bestückten Reaktionsbehälter gemäß Fig. 3 eingesetzten und mit Indikatormaterial, Reaktionszusätzen und dem Pufferring bestückten Einsatz gemäß Fig. 1 sowie den Schraubverschluss in einer perspektivischen Ansicht;
- Fig. 6: - den in Fig. 4 gezeigten Einsatz und Reaktionsbehälter mit teilweise aufgesetztem Schraubverschluss in einer perspektivischen Ansicht;
- Fig. 7: - den in Fig. 4 gezeigten Einsatz und Reaktionsbehälter mit vollständig aufgesetztem Schraubverschluss in einer perspektivischen Ansicht;
- Fig. 8: - eine Detailansicht der Halter für Reaktionszusätze des erfindungsgemäßen Einsatzes in einer perspektivischen Ansicht;
- Fig. 9 u. 10: - Detailansichten der Halter für Indikatormaterialien des erfindungsgemäßen Einsatzes in einer perspektivischen Ansicht;
- Fig. 11: - ein Beispiel für ein Indikatormaterial in einer Draufsicht;
- Fig. 12: - den in einem Ständer platzierten erfindungsgemäßen Einsatz in einer perspektivischen Ansicht;
- Fig. 13: - ein Blockdiagramm des erfindungsgemäßen Verfahrens.

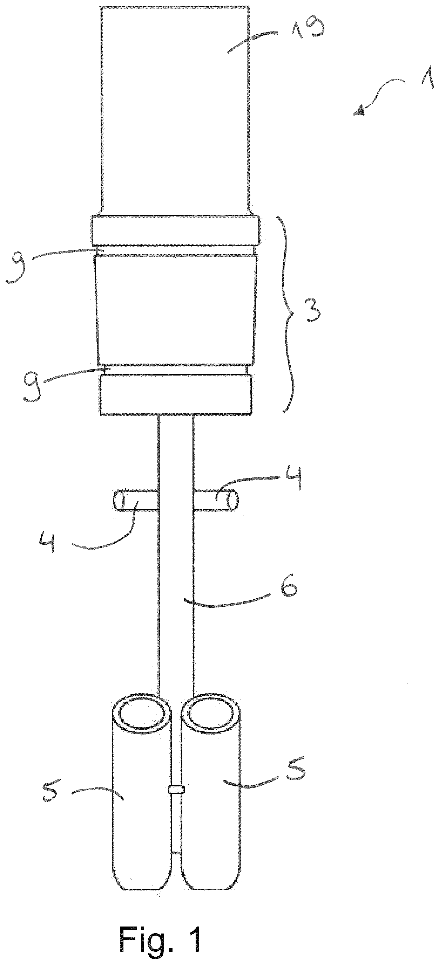

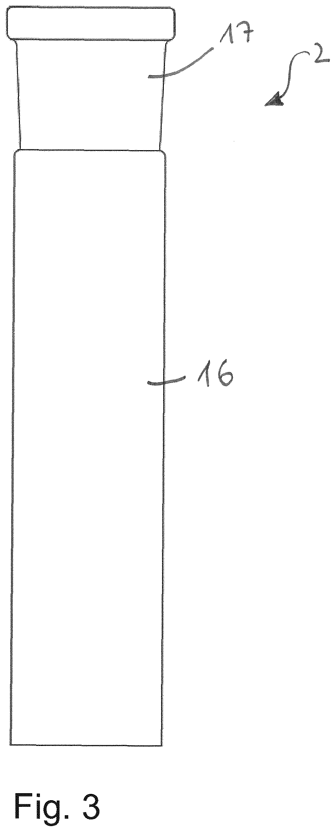

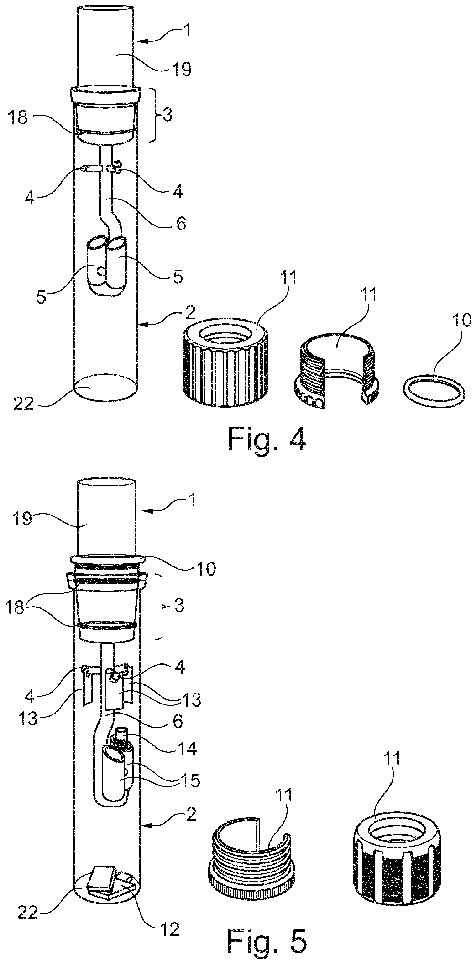

Figur 1 zeigt einen erfindungsgemäßen Einsatz 1 für einen beispielsweise in Figur 3 gezeigten Reaktionsbehälter 2. Der Einsatz 1 weist einen stopfenförmigen Dichtabschnitt 3 auf, der zwei umlaufende Nuten 9 für beispielsweise in Figur 4 gezeigte Dichtringe in Form von O-Ringen 18 hat. An den Dichtabschnitt 3 schließt sich ein Verbindungssteg 6 an, von welchem zwei Halter 4 für Indikatormaterialien in Form von frei auskragenden Stegen abragen. An dem anderen, dem Dichtabschnitt 3 gegenüber liegenden Ende des Verbindungsstegs 6 sind zwei Halter 5 für Reaktionszusätze in Form von zwei offenen Röhrchen angeformt. Der Dichtabschnitt 3, der Verbindungssteg 6 sowie die Halter 4 für Indikatormaterialien und die Halter 5 für Reaktionszusätze können aus dem gleichen Material, beispielsweise Borosilikatglas, und insbesondere auch einstückig ausgeformt sein. Auch wenn die Figuren derart beschrieben werden, dass die Halter 5 Reaktionszusätze aufnehmen, können diese grundsätzlich auch alternativ oder zusätzlich mit Stoffproben bestückt werden. Durch den Verbindungssteg 6 sind die Halter 4 für Indikatormaterialien von den Haltern 5 für Reaktionszusätze mit einem konstruktiv vorgegebenen Maß voneinander beabstandet. Auf der anderen Seite des Dichtabschnitts 3, die nicht in den Verbindungssteg 6 übergeht, ist ein Griffabschnitt 19 für das Halten und Einführen des Einsatzes 1 in einen Reaktionsbehälter 2 angeformt. Insgesamt weist der Einsatz 1 eine längliche, stabähnliche Gesamtform auf, sodass er beispielsweise für längliche, rohrförmige Hülsen wie den in Figur 3 gezeigten Reaktionsbehälter 2 geeignet ist.

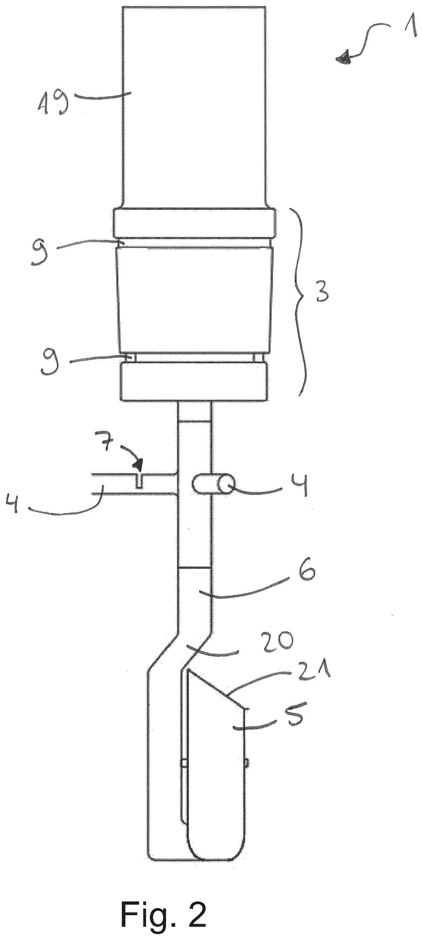

Figur 2 zeigt eine Seitenansicht des erfindungsgemäßen Einsatzes 1. Hierbei wird deutlich, dass der Verbindungssteg 6 in dem gezeigten Ausführungsbeispiel an seinem unteren Ende einen Knick 20 aufweist und der Verbindungssteg daran anschließend in eine Aufnahme für einen Halter 5 für Reaktionszusätze übergeht. Der Halter 5 ist als Röhrchen mit schräger Öffnungsfläche 21 ausgeführt, um eine einfache Bestückung des Halters 5 mit Reaktionszusätzen zu ermöglichen. Außerdem ist in Figur 2 zu erkennen, dass zumindest ein Halter 4 für Indikatormaterialien als geschlitzter Steg mit einem Schlitz 7 ausgeführt ist. Ein beispielsweise mit einer Bohrung versehenes Indikatormaterial kann somit einfach über den Steg gestreift und in den Schlitz 7 eingehängt werden, wodurch sich ein sicherer Halt des Indikatormaterials bei gleichzeitig einfacher Montage ergibt.

Figur 3 zeigt einen Reaktionsbehälter 2, der in dem gezeigten Ausführungsbeispiel als längliche Glashülse ausgeführt ist. Der Reaktionsbehälter 2 weist einen im Wesentlichen zylindrischen Grundkörper 16 sowie einen konisch verlaufenden Abschluss 17 auf. Der Abschluss 17 dient der Aufnahme eines optionalen, beispielsweise in Figur 4 gezeigten Schraubverschlusses 11 und somit zur Erhöhung der Dichtung und Fixierung eines Einsatzes 1 in dem Reaktionsbehälter 2. Außerdem liegt ein Dichtabschnitt 3 eines Einsatzes 1 in dem Abschluss 17 zumindest teilweise an, wobei ein unerwünschtes Durchrutschen des Einsatzes 1 durch die nach oben hin konische Verbreiterung des Abschlusses 17 verhindert wird.

Figur 4 zeigt den in den Reaktionsbehälter 2 eingesetzten Einsatz 1. Hierbei wird deutlich, dass der Dichtabschnitt 3 des Einsatzes 1 in dem Abschluss 17 angeordnet ist. Darüber erstreckt sich der Griffabschnitt 19 des Einsatzes 1 und ragt aus dem Reaktionsbehälter 2 heraus, sodass der Einsatz mühelos wieder aus dem Reaktionsbehälter 2 entfernt werden kann. Ebenfalls ist zu erkennen, dass die Halter 5 für Reaktionszusätze von dem Boden 22 des Reaktionsbehälters 2 deutlich beabstandet sind. Neben dem Reaktionsbehälter 2 mit dem Einsatz 1 sind ein zweiteiliger Schraubverschluss 11 und ein Pufferring 10 gezeigt, die zur Montage auf dem Reaktionsbehälter 2 bzw. auf dem Einsatz 1 geeignet sind und eine zusätzliche Abdichtung des Reaktionsbehälters 2 gewährleisten können.

Figur 5 zeigt den Reaktionsbehälter 2 und den in den Reaktionsbehälter 2 eingesetzten Einsatz 1 in einem bestückten Zustand. Auf dem Boden 22 des Reaktionsbehälters 2 ist eine auf schädliche Ausgasungen zu untersuchende Stoffprobe 12 platziert, hier in Form von festen Zuschnitten. In einem Halter 5 für Reaktionszusätze ist ein Reaktionszusatz platziert, hier in Form eines schmalen Röhrchens mit Aktivkohle (Adsorber) 14. In einen weiteren Halter 5 ist bi-destilliertes Wasser gefüllt. An den Haltern 4 für Indikatormaterialien sind drei Indikatormaterialien 13 in Form von mit Bohrungen versehenen Metallplättchen aufgehängt. Der Pufferring 10 ist über den Griffabschnitt 19 des Einsatzes 1 gestreift und somit am Außenumfang des Griffabschnitts 19 angeordnet. Die gezeigten Komponenten können beispielsweise einem erfindungsgemäßen Prüfsystem entnommen sein, welches als Kit bereits den Einsatz 1, den Reaktionsbehälter 2, Indikatormaterialien 13 sowie optional auch Reaktionszusätze wie destilliertes Wasser und Aktivkohleadsorber enthält. In diesem Fall wäre nur noch die zu untersuchende Stoffprobe 12 für den Nachweis bereitzustellen.

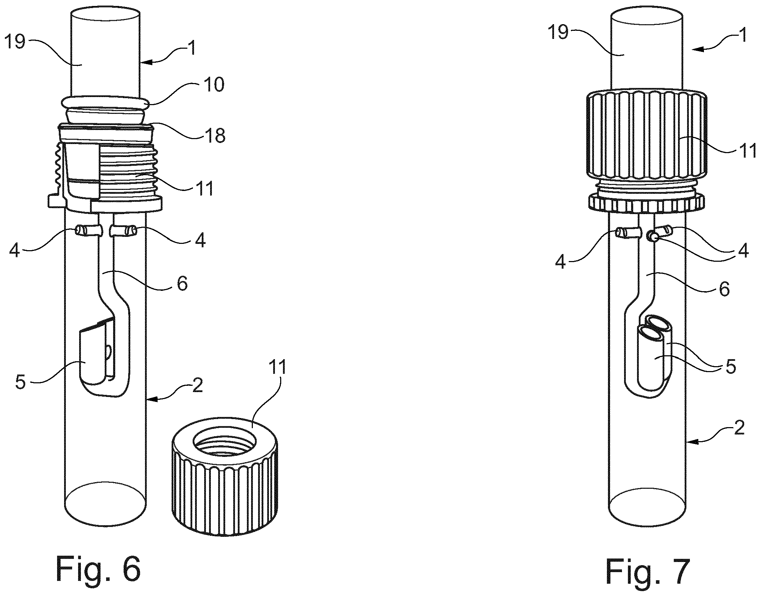

Figur 6 zeigt einen Zustand des Reaktionsbehälters 2 mit dem eingesetzten Einsatz 1, in dem der Pufferring 10 über den Griffabschnitt 19 des Einsatzes gestreift ist und zudem ein Teil des zweiteiligen Schraubverschlusses 11 am Außenumfang des Reaktionsbehälters 2 angeordnet ist.

Figur 7 zeigt in einer Fortsetzung von Figur 6 die vollständige Anordnung des Schraubverschlusses 11 auf dem Reaktionsbehälter 2. Auch bei montiertem Zustand des Schraubverschlusses 11 ragt weiterhin ein Griffabschnitt 19 des Einsatzes 1 oben aus dem Schraubverschluss 11 heraus. Der Reaktionsbehälter 2 kann somit gemeinsam mit dem Einsatz 1 über den Griffabschnitt 19 insbesondere auch manuell gehalten und transportiert werden, ohne dass es hierbei zu einer Verunreinigung des Reaktionsbehälters 2 kommt.

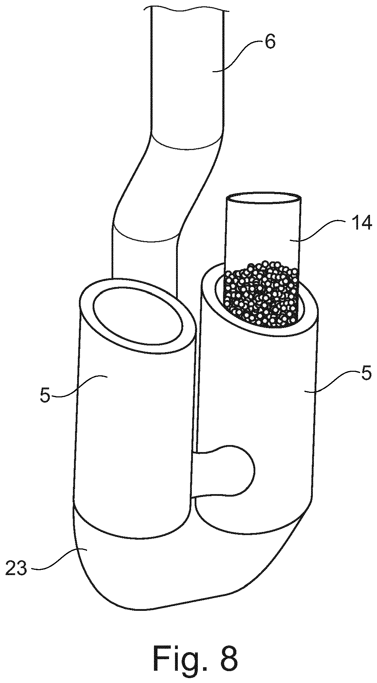

Figur 8 zeigt eine Detailansicht der Halter 5 für Reaktionszusätze des Einsatzes 1. Hierbei wird insbesondere eine einteilige Ausführung der Halter 5 mit dem Verbindungssteg 6 deutlich. Zudem sind zwei unterschiedliche Reaktionszusätze ersichtlich, nämlich ein Röhrchen mit Aktivkohle (Adsorber) 14 für detaillierte Schadstoffanalysen im Anschluss an einen Nachweis von aus der Stoffprobe 12 austretenden gasförmigen Substanzen sowie anhand des Wasserspiegels das in den anderen Halter 5 gefüllte Wasser 23. Beide Reaktionszusätze sind aufgrund der jeweils für sie vorgesehenen Halter 5 voneinander beabstandet, sodass eine unerwünschte Nebenreaktion zwischen beiden Reaktionszusätzen weitgehend ausgeschlossen ist.

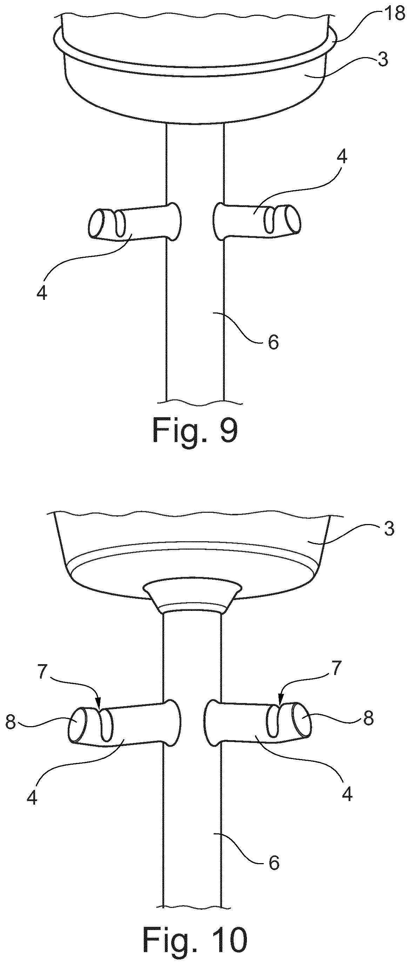

Die Figuren 9 und 10 zeigen Detailansichten der Halter 4 für Indikatormaterialien 13. In diesen Ansichten wird nicht nur die Position der Halter 4 in Relation zu dem Verbindungssteg 6 sowie dem Dichtabschnitt 3 (in Figur 9 mit O-Ring 18) deutlich, sondern auch die spezielle Form. Besonders in Figur 10 ist die stegartige Ausführung mit an einer Oberseite der Stege eingebrachten Schlitzen 7 sowie mit nach oben und innen gebogenen Endabschnitten 8 der Stege gut zu erkennen. Durch diese Form der Halter 4 wird ein besonders einfaches Anbringen und sicheres Halten der Indikatormaterialien 13 gewährleistet.

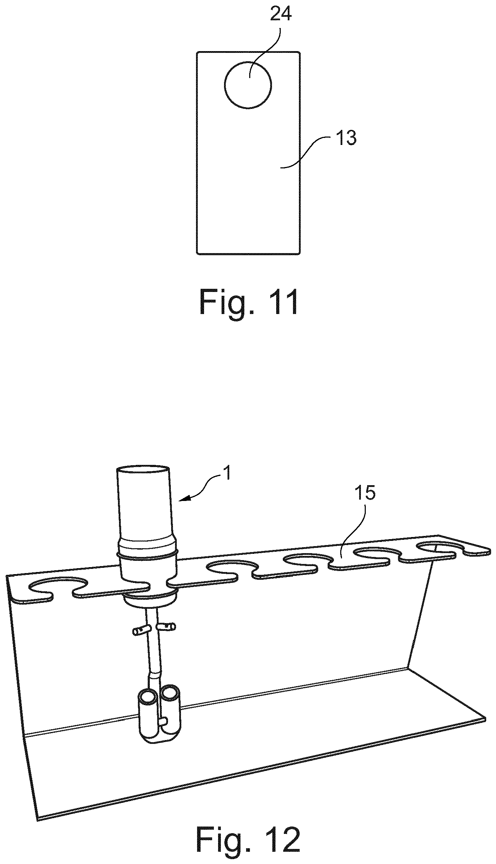

In Figur 11 ist ein Beispiel für ein Indikatormaterial 13 gezeigt. Dieses ist in Form eines flachen Metallplättchens ausgeführt und weist eine Bohrung 24 zum Aufhängen des Indikatormaterials 13 an einem Halter 4 für Indikatormaterialien des Einsatzes 1 auf. Die Metallplättchen sind insbesondere vorgefertigt, beispielsweise vorgeschnitten, gereinigt und getrocknet und bis zu ihrem Einsatz atmosphärengeschützt verpackt. Als Metalle kommen bevorzugt Silber, Kupfer und Blei in Betracht, diese Angaben sind jedoch nicht als einschränkend zu verstehen.

Figur 12 zeigt beispielhaft einen in einem Edelstahlständer 15 platzierten Einsatz 1. Der Edelstahlständer 15 weist fünf weitere Öffnungen zum Halten von fünf weiteren Einsätzen 1 auf. Auf diese Weise können sechs Einsätze 1 nebeneinander platziert und somit besonders komfortabel und schnell bestückt werden. Für die mit Einsätzen 1 bestückte Reaktionsbehälter 2 existiert eine weitere Halteeinrichtung aus Aluminium mit 12 Öffnungen um während der für gattungsgemäße Nachweise vorgesehenen Temperaturerhöhung des Reaktionsbehälters 2 für einen sicheren Halt zu sorgen.

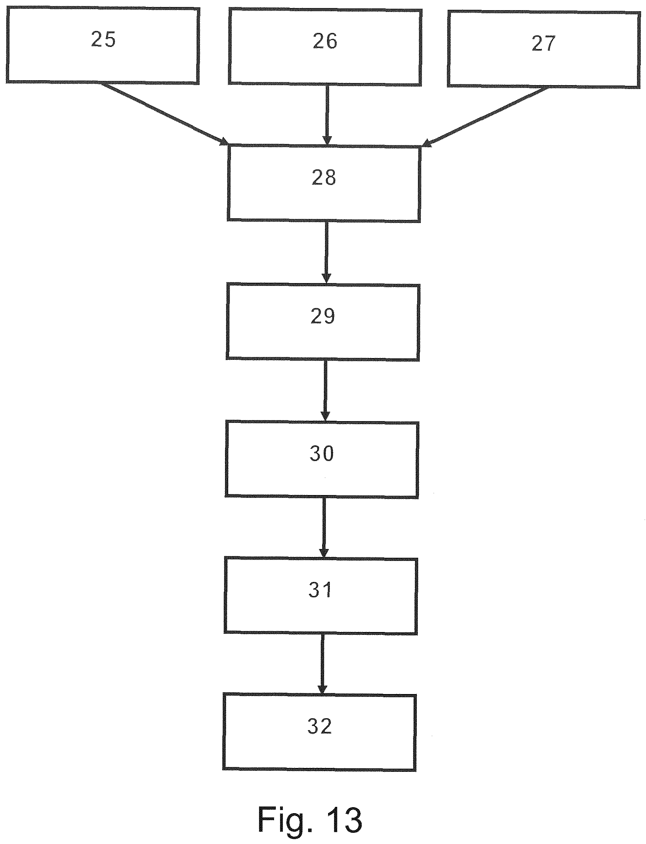

Figur 13 zeigt den Ablauf des erfindungsgemäßen Verfahrens mit den folgenden Schritten:

| | |
|---|---|
| 25 (a1) | Einbringen einer Stoffprobe in einen Reaktionsbehälter und Einbringen zumindest eines Reaktionszusatzes in einen Reaktionszusatzhalter eines Einsatzes des Reaktionsbehälters; |
| 26 (a2) | oder alternativ Einbringen einer Stoffprobe in einen Stoffprobenhalter eines Einsatzes eines Reaktionsbehälters und Einbringen zumindest eines Reaktionszusatzes in den Reaktionsbehälter; |
| 27 (a3) | oder alternativ Einbringen einer Stoffprobe in einen Stoffprobenhalter eines Einsatzes eines Reaktionsbehälters und Einbringen zumindest eines Reaktionszusatzes in einen Reaktionszusatzhalter des Einsatzes des Reaktionsbehälters |
| 28 (b) | Befestigen zumindest eines Indikatormaterials an einem Indikatorhalter eines Einsatzes für einen Reaktionsbehälter; |
| 29 (c) | Einsetzen des Einsatzes in den Reaktionsbehälter; |
| 30 (d) | Verschließen des Reaktionsbehälters mit einem dichtenden Verschluss; |
| 31 (e) | Erwärmen des verschlossenen Reaktionsbehälters für eine vorbestimmte Versuchszeit; |
| 32 (f) | nach Ablauf der vorbestimmten Versuchszeit Prüfen der Indikatormaterialien auf Merkmale einer chemischen Reaktion des Indikatormaterials mit aus der Stoffprobe ausgetretenen gasförmigen Substanzen. |

Hierbei ist der Einsatz insbesondere ein Einsatz 1 gemäß den vorbeschriebenen Merkmalen. Somit entspricht der Reaktionszusatzhalter insbesondere einem Halter 5 für Reaktionszusätze des vorbeschriebenen Einsatzes 1, wobei der Halter 5 auch als Stoffprobenhalter ausgeführt sein kann.

Die Schritte 25, 26 und 27 sind als drei Alternativen zu verstehen, von denen jeweils eine Variante pro Nachweis anwendbar ist. Welche Alternative geeignet ist, hängt von der Beschaffenheit des Einsatzes 1 des Reaktionsbehälters 2 ab, da dieser wahlweise Reaktionszusatzhalter oder Stoffprobenhalter oder beide Arten von Haltern 5 mit einem dazwischen belassenen Abstand aufweisen kann.

Die Schritte 25, 27 oder 27 und der Schritt 28 können in beliebiger Reihenfolge durchgeführt werden. Das bedeutet, dass zuerst die Stoffprobe und die Reaktionszusätze eingebracht und anschließend das Indikatormaterial befestigt werden können oder umgekehrt.

### Bezugszeichenliste:

- 1: - Einsatz
- 2: - Reaktionsbehälter
- 3: - Dichtabschnitt
- 4: - Halter für Indikatormaterial
- 5: - Halter für Reaktionszusätze
- 6: - Verbindungssteg
- 7: - Schlitz
- 8: - Endabschnitt
- 9: - Nut
- 10: - Dichtring
- 11: - Schraubverschluss
- 12: - Stoffprobe
- 13: - Indikatormaterial
- 14: - Aktivkohleadsorber
- 15: - Aluminiumständer
- 16: - Grundkörper
- 17: - Abschluss
- 18: - O-Ring
- 19: - Griffabschnitt
- 20: - Knick
- 21: - Öffnungsfläche
- 22: - Boden
- 23: - Wasser
- 24: - Bohrung
- 25: - Einbringen Stoffprobe in Reaktionsbehälter und Einbringen Reaktionszusatz in Reaktionszusatzhalter
- 26: - Einbringen Stoffprobe in Stoffprobenhalter und Einbringen Reaktionszusatz in Reaktionsbehälter
- 27: - Einbringen Stoffprobe in Stoffprobenhalter und Einbringen Reaktionszusatz in Reaktionszusatzhalter
- 28: - Befestigen des Indikatormaterials
- 29: - Einsetzen des Einsatzes
- 30: - Verschließen des Reaktionsbehälters
- 31: - Erwärmen des Reaktionsbehälters
- 32: - Prüfen der Indikatormaterialien

## Patentansprüche

1. Einsatz (1) für Reaktionsbehälter (2) zum Nachweis von aus einer Stoffprobe (12) austretenden gasförmigen Substanzen, der einen Dichtabschnitt (3) zum dichtenden Verschließen des Reaktionsbehälters (2) sowie zumindest einen Halter (4) für ein Indikatormaterial (13) hat, wobei der Einsatz (1) zumindest einen weiteren Halter (5) für Reaktionszusätze und/oder die Stoffprobe (12) aufweist, **dadurch gekennzeichnet, dass** der zumindest eine weitere Halter (5) für Reaktionszusätze und/oder die Stoffprobe (12) zumindest ein Reagenzröhrchen zur Aufnahme eines Reaktionszusatzes und/oder der Stoffprobe (12) aufweist und dass der zumindest eine Halter (4) für das Indikatormaterial (13) durch einen Verbindungssteg (6) von dem zumindest einen weiteren Halter (5) für Reaktionszusätze und/oder die Stoffprobe (12) räumlich beabstandet ist.

2. Einsatz (1) für Reaktionsbehälter (2) nach Anspruch 1, **dadurch gekennzeichnet, dass** der zumindest eine Halter (4) für das Indikatormaterial (13) sowie der zumindest eine weitere Halter (5) für Reaktionszusätze und/oder die Stoffprobe (12) aus dem gleichen Material hergestellt sind.

3. Einsatz (1) für Reaktionsbehälter (2) nach Anspruch 2, **dadurch gekennzeichnet, dass** das Material des zumindest einen Halters (4) sowie des zumindest einen weiteren Halters (5) ein Glasmaterial ist.

4. Einsatz (1) für Reaktionsbehälter (2) nach einem der vorhergehenden Ansprüche, **dadurch gekennzeichnet, dass** der zumindest eine Halter (4) für das Indikatormaterial (13) als geschlitzter Steg mit einem gebogenen Endabschnitt (8) ausgeführt ist.

5. Einsatz (1) für Reaktionsbehälter (2) nach einem der vorhergehenden Ansprüche, **dadurch gekennzeichnet, dass** der Dichtabschnitt (3) zumindest eine Nut (9) für einen Dichtring (18) aufweist.

6. Reaktionsbehälter (2) mit einem Einsatz (1) nach einem der vorhergehenden Ansprüche.

7. Reaktionsbehälter (2) nach Anspruch 6, **dadurch gekennzeichnet, dass** der Reaktionsbehälter (2) und/oder der Einsatz (1) einen Schraubverschluss (11) aufweist.

8. Prüfsystem zum Nachweis von aus einer Stoffprobe (12) austretenden gasförmigen Substanzen, das einen Einsatz (1) nach einem der Ansprüche 1 bis 5, einen Reaktionsbehälter (2) sowie Indikatormaterial (13), insbesondere einen Reaktionsbehälter (2) mit einem Einsatz (1) nach einem der Ansprüche 6 oder 7 hat.

9. Prüfsystem nach Anspruch 8, **dadurch gekennzeichnet, dass** es eine Auswerteeinheit für einen computergestützten Nachweis von aus einer Stoffprobe (12) austretenden gasförmigen Substanzen aufweist.

10. Verfahren zum Durchführen eines Nachweises von aus einer Stoffprobe (12) austretenden gasförmigen Substanzen, mit den Schritten:
a1) Einbringen (25) einer Stoffprobe in einen Reaktionsbehälter und Einbringen zumindest eines Reaktionszusatzes in einen Reaktionszusatzhalter eines gemäß einem der Ansprüche 1 bis 5 ausgebildeten Einsatzes des Reaktionsbehälters;
a2) oder alternativ Einbringen (26) einer Stoffprobe in einen Stoffprobenhalter eines gemäß einem der Ansprüche 1 bis 5 ausgebildeten Einsatzes eines Reaktionsbehälters und Einbringen zumindest eines Reaktionszusatzes in den Reaktionsbehälter;
a3) oder alternativ Einbringen (27) einer Stoffprobe in einen Stoffprobenhalter eines gemäß einem der Ansprüche 1 bis 5 ausgebildeten Einsatzes eines Reaktionsbehälters und Einbringen zumindest eines Reaktionszusatzes in einen Reaktionszusatzhalter des Einsatzes des Reaktionsbehälters;
b) Befestigen (28) zumindest eines Indikatormaterials an einem Indikatorhalter des Einsatzes des Reaktionsbehälters;
c) Einsetzen (29) des Einsatzes in den Reaktionsbehälter;
d) Verschließen (30) des Reaktionsbehälters mit einem dichtenden Verschluss;
e) Erwärmen (31) des verschlossenen Reaktionsbehälters für eine vorbestimmte Versuchszeit;
f) nach Ablauf der vorbestimmten Versuchszeit Prüfen (32) der Indikatormaterialien auf Merkmale einer chemischen Reaktion des Indikatormaterials mit aus der Stoffprobe ausgetretenen gasförmigen Substanzen.

11. Verfahren nach Anspruch 10, **dadurch gekennzeichnet, dass** die Untersuchung der Indikatoren auf Merkmale einer chemischen Reaktion computergestützt mit einem Bildverarbeitungsprogramm erfolgt.

12. Verwendung eines Einsatzes (1) für einen Reaktionsbehälter (2) nach einem der Ansprüche 1 bis 5 für Versuche zur Prüfung der Objektverträglichkeit von Materialien mit chemisch reaktionssensiblen Objekten und Umgebungen.

## Claims

1. Insert (1) for reaction vessels (2) for detection of gaseous substances exiting from a sample of matter (12), having a sealing section (3) for sealing closure of the reaction vessel (2) and at least one holder (4) for an indicator material (13), wherein the insert (1) has at least one further holder (5) for reaction additives and/or the sample of matter (12), **characterized in that** the at least one further holder (5) for reaction additives and/or the sample of matter (12) has at least one reagent tube to accommodate a reaction additive and/or the sample of matter (12), and **in that** the at least one holder (4) for the indicator material (13) is spaced apart by a connecting element (6) from the at least one further holder (5) for reaction additives and/or the sample of matter (12).

2. Insert (1) for reaction vessels (2) according to Claim 1, **characterized in that** the at least one holder (4) for the indicator material (13) and the at least one further holder (5) for reaction additives and/or the sample of matter (12) have been manufactured from the same material.

3. Insert (1) for reaction vessels (2) according to Claim 2, **characterized in that** the material of the at least one holder (4) and/or the at least one further holder (5) is a glass material.

4. Insert (1) for reaction vessels (2) according to any of the preceding claims, **characterized in that** the at least one holder (4) for the indicator material (13) is executed as a slotted element having a curved end section (8) .

5. Insert (1) for reaction vessels (2) according to any of the preceding claims, **characterized in that** the sealing section (3) has at least one groove (9) for a gasket ring (18).

6. Reaction vessel (2) having an insert (1) according to any of the preceding claims.

7. Reaction vessel (2) according to Claim 6, **characterized in that** the reaction vessel (2) and/or the insert (1) has a screw closure (11).

8. Test system for detection of gaseous substances exiting from a sample of matter (12), having an insert (1) according to any of Claims 1 to 5, a reaction vessel (2) and indicator material (13), especially a reaction vessel (2) having an insert (1) according to either of Claims 6 and 7.

9. Test system according to Claim 8, **characterized in that** it has an evaluation unit for computer-assisted detection of gaseous substances exiting from a sample of matter (12).

10. Method of performing detection of gaseous substances exiting from a sample of matter (12), having the steps of:
a1) introducing (25) a sample of matter into a reaction vessel and introducing a reaction additive into a reaction additive holder of an insert according to any of Claims 1 to 5 of the reaction vessel;
a2) or alternatively introducing (26) a sample of matter into a sample-of-matter holder of an insert according to any of Claims 1 to 5 of a reaction vessel and introducing at least one reaction additive into the reaction vessel;
a3) or alternatively introducing (27) a sample of matter into a sample-of-matter vessel of an insert according to any of Claims 1 to 5 of a reaction vessel and introducing at least one reaction additive into a reaction additive holder of the insert of the reaction vessel;
b) securing (28) at least one indicator material in an indicator holder of the insert of the reaction vessel;
c) inserting (29) the insert into the reaction vessel;
d) closing (30) the reaction vessel with a sealing closure;
e) heating (31) the closed reaction vessel for a predetermined test period;
f) after the predetermined test period has elapsed, testing (32) the indicator materials for features of a chemical reaction of the indicator material with gaseous substances that have exited from the sample of matter.

11. Method according to Claim 10, **characterized in that** the study of the indicators for features of a chemical reaction is effected in a computer-assisted manner with an image processing program.

12. Use of an insert (1) for a reaction vessel (2) according to any of Claims 1 to 5 for tests for testing the object compatibility of materials with chemically reaction-sensitive objects and environments.

## Revendications

1. Insert (1) pour contenant de réaction (2) pour la détection de substances gazeuses sortant d'un échantillon de matière (12), qui comprend une section d'étanchéité (3) pour la fermeture étanche du contenant de réaction (2), ainsi qu'au moins un support (4) pour un matériau indicateur (13), l'insert (1) comprenant au moins un support supplémentaire (5) pour des additifs de réaction et/ou l'échantillon de matière (12), **caractérisé en ce que** ledit au moins un support supplémentaire (5) pour des additifs de réaction et/ou l'échantillon de matière (12) comprend au moins une éprouvette pour la réception d'un additif de réaction et/ou de l'échantillon de matière (12) et **en ce que** ledit au moins un support (4) pour le matériau indicateur (13) est espacé dans l'espace dudit au moins un support supplémentaire (5) pour des additifs de réaction et/ou l'échantillon de matière (12) par une traverse de connexion (6).

2. Insert (1) pour contenant de réaction (2) selon la revendication 1, **caractérisé en ce que** ledit au moins un support (4) pour le matériau indicateur (13), ainsi que ledit au moins un support supplémentaire (5) pour des additifs de réaction et/ou l'échantillon de matière (12) sont fabriqués en le même matériau.

3. Insert (1) pour contenant de réaction (2) selon la revendication 2, **caractérisé en ce que** le matériau dudit au moins un support (4), ainsi que dudit au moins un support supplémentaire (5) est un matériau de verre.

4. Insert (1) pour contenant de réaction (2) selon l'une quelconque des revendications précédentes, **caractérisé en ce que** ledit au moins un support (4) pour le matériau indicateur (13) est réalisé sous la forme d'une traverse fendue ayant une section d'extrémité incurvée (8).

5. Insert (1) pour contenant de réaction (2) selon l'une quelconque des revendications précédentes, **caractérisé en ce que** la section d'étanchéité (3) comprend au moins une rainure (9) pour une bague d'étanchéité (18).

6. Contenant de réaction (2) comprenant un insert (1) selon l'une quelconque des revendications précédentes.

7. Contenant de réaction (2) selon la revendication 6, **caractérisé en ce que** le contenant de réaction (2) et/ou l'insert (1) comprennent une fermeture à vis (11).

8. Système de contrôle pour la détection de substances gazeuses sortant d'un échantillon de matière (12), qui comprend un insert (1) selon l'une quelconque des revendications 1 à 5, un contenant de réaction (2), ainsi qu'un matériau indicateur (13), notamment un contenant de réaction (2) muni d'un insert (1) selon l'une quelconque des revendications 6 ou 7.

9. Système de contrôle selon la revendication 8, **caractérisé en ce qu'**il comprend une unité d'évaluation pour une détection assistée par ordinateur de substances gazeuses sortant d'un échantillon de matière (12) .

10. Procédé de réalisation d'une détection de substances gazeuses sortant d'un échantillon de matière (12), comprenant les étapes suivantes :
a1) l'introduction (25) d'un échantillon de matière dans un contenant de réaction et l'introduction d'au moins un additif de réaction dans un support d'additif de réaction d'un insert du contenant de réaction configuré selon l'une quelconque des revendications 1 à 5 ;
a2) ou en variante l'introduction (26) d'un échantillon de matière dans un support d'échantillon de matière d'un insert d'un contenant de réaction configuré selon l'une quelconque des revendications 1 à 5 et l'introduction d'au moins un additif de réaction dans le contenant de réaction ;
a3) ou en variante l'introduction (27) d'un échantillon de matière dans un support d'échantillon de matière d'un insert d'un contenant de réaction configuré selon l'une quelconque des revendications 1 à 5 et l'introduction d'au moins un additif de réaction dans un support d'additif de réaction de l'insert du contenant de réaction ;
b) la fixation (28) d'au moins un matériau indicateur sur un support d'indicateur de l'insert du contenant de réaction ;
c) l'insertion (29) de l'insert dans le contenant de réaction ;
d) la fermeture (30) du contenant de réaction avec une fermeture étanche ;
e) le chauffage (31) du contenant de réaction fermé pour un temps d'essai prédéterminé ;
f) après l'écoulement du temps d'essai prédéterminé, le contrôle (32) des matériaux indicateurs en termes de caractéristiques d'une réaction chimique du matériau indicateur avec des substances gazeuses sorties de l'échantillon de matière.

11. Procédé selon la revendication 10, **caractérisé en ce que** l'examen des indicateurs en termes de caractéristiques d'une réaction chimique a lieu d'une manière assistée par ordinateur avec un programme de traitement d'images.

12. Utilisation d'un insert (1) pour un contenant de réaction (2) selon l'une quelconque des revendications 1 à 5 pour des essais pour le contrôle de la compatibilité de matériaux avec des objets et environnements sensibles à des réactions chimiques.
